# EUROPEAN PATENT APPLICATION

(11) **EP 1 376 060 A1**
(43) Date of publication of application: **02.01.2004**
(21) Application number: 02013646.1
(22) Date of filing: 19.06.2002
(51) Int. Cl.: G01C 21/34

(54) **A method for navigation route calculating to a destination and a system and motor vehicle applying such method**

(71) Applicant: SIEMENS AKTIENGESELLSCHAFT, 80333 München (DE)
(72) Inventor: Hendriks, Antonius Johannes, 5509 NR Veldhoven (NL); Verriet, Jacques, 5627 DZ Eindhoven (NL)

(57) **Abstract**

In a motor vehicle (30) a navigation route is calculated towards a destination (E) for thereupon sequentially presenting navigation indications to a vehicle user as being based on an actual position (A) of said vehicle and on an actually calculated route.

In particular, the method detects a user request for such calculating and evaluates an actual vehicle speed value. From the speed value, it finds a predicted vehicle position (C) at a predetermined future instant in time, and calculates the navigation route as between the predicted vehicle position (C) and the destination (E).

## Description

The invention relates to a method for in a motor vehicle calculating a navigation route towards a destination for thereupon sequentially presenting navigation indications to a vehicle user as being based on an actual position of said vehicle and on an actually calculated route. Such methods have become in general use. However, such request may in fact be given during actual travel. The calculation may then lead to a route that differs from the one that the vehicle apparently takes, which could cause the navigation system to give a user indication only immediately before the instant where the relevant action should be taken. The inventors have recognized that it were better to maintain the first part of the route that is being followed unchanged.

In consequence, amongst other things, it is an object of the present invention to improve the navigation method as recited by maintaining as much as possible the initial part of the route actually being followed.

Now therefore, according to one of its aspects the invention is characterized by a detection of a user request for such calculating and evaluating an actual vehicle speed value;
- as based on such speed value, finding a predicted vehicle position at a predetermined future instant in time;
- and calculating said navigation route as between said predicted vehicle position and said destination.

According to another aspect, the invention is preferably characterized by calculating said navigation route as from said actual vehicle position in case of a speed value at or below a threshold value.

The invention also relates to a system being arranged for implementing a method as claimed in Claim 1 and to a motor vehicle comprising such system. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
- Figure 1,: a route as calculated from an actual vehicle position;
- Figure 2,: a route as calculated from a predetermined future vehicle position;
- Figure 3,: a flow chart of a method according to the present invention;
- Figure 4,: a motor vehicle schematic according to the present invention.

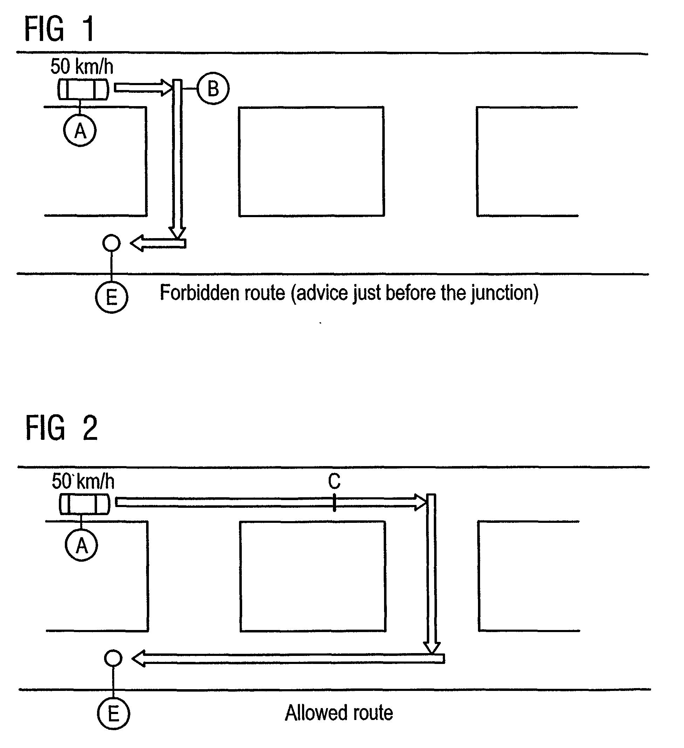

Figure 1 illustrates a route as calculated from an actual vehicle position A to a destination E. When the user person has given a request for such calculation, the navigation system may need some time for doing the calculation. Now, when the instant for giving the first indication to the user, some time may have passed. In particular, when the vehicle is approaching the junction at B, the navigation system may advise the driver to turn right immediately, where the user had originally the intention to go straight ahead. Such immediate change could prove extremely confusing to the user person, and possibly even very dangerous.

Figure 2 illustrates an alternative route as recalculated from a predicted position C of the vehicle at a predetermined future instant in time. Generally, although not by way of restriction, position C will lie on the road straight ahead. Exceptions could be when the system knows that the vehicle should ***legally*** turn right always, because the route ahead is one-way, or forbidden for the applicable category of vehicle. The ***distance*** between the actual position A and the predicted position C may depend on the actual and/or predicted vehicle speed, so that the ***time*** until the first change between the old path and the calculated route will ***not*** lie below a certain value, such as 20 seconds or the like. Another aspect could relate to the character of the road (a motorway could raise the lower bound), traffic conditions, such as being scarce or heavy (a longer value in heavy traffic), a user person reaction time that may have been prespecified by the user person, and possibly other parameters.

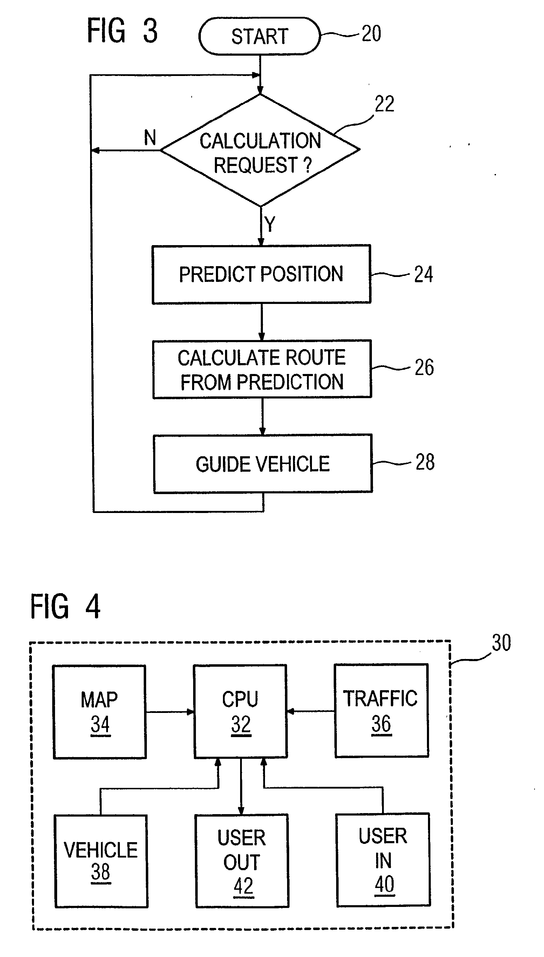

Figure 3 illustrates a flow chart of a method according to the present invention. In block 20, the operation is started, and the necessary hardware and software facilities are assigned. In block 22, the system detects whether a user request for calculating a route has been received. If not, the system reverts to the same block 22, which thereby operates as a waiting loop.

However, if such user request for route calculating is received indeed, the system goes to block 24 and finds a predicted position. Subsequently, in block 26, the route is calculated as from the predicted position towards the destination. Thereafter, the system proceeds to block 28 for effecting further guidance. At the destination, the system may again look for a user request in block 22. If considered necessary, after some interval of guidance, the system may again look for an amending user request, but this has not been shown for brevity. If in block 22 the system finds that the vehicle speed is either zero or below some appropriate threshold, the finding of a future position may be foregone, and the calculating may be effected from an actual position. Speeds below say 5 kilometers/hour would in fact indicate that the vehicle is parked, or even if moving, obviously parking in or parking out.

Figure 4 illustrates a schematic of a motor vehicle (30) according to the present invention. For brevity, the various systems and subsystems of the motor vehicle 30 have only been shown as blocks. The processing is generally effected in CPU 32, that accesses sources of map information 34, traffic information 36, vehicle information 38 and user input information 40. Part of these sources will be static, but part thereof may be dynamic, such as in particular pertaining to user input signals, the actual vehicle position, and varying traffic informations that may be provided as broadcast codes. After calculating the relevant route, user travelling indications may be outputted as user output information in the form of visual display, speech and other manners in block 42.

The advantages of the invention are various. In the first place, the user person will not receive an advice at or very near a junction or other location where a user operation should be effected. Hence, such confusing situations as where the user will be asked to execute an immediate turn are avoided. Furthermore, the probability for an interval ***without*** guidance will be diminished. Such could in fact occur as follows. When the user receives the new advice, immediate reaction may prove impossible, such as through having been driving in the wrong lane. After then driving ahead, the vehicle would have driven off the newly calculated route, which would necessitate to ***again*** calculate the best route. However, this could require some more time, during which the user would receive no advice at all.

The present invention has been disclosed here above with reference to preferred embodiments. However, persons skilled in the relevant art will recognize various changes and amendments. Unless such changes and amendments would extend outside the scope of the Claims hereafter appended, they should be considered as being part of the present invention. The drawings and disclosure should in consequence be considered illustrative rather than limiting.

## Claims

1. A method for in a motor vehicle (30) calculating a navigation route towards a destination (E) for thereupon sequentially presenting navigation indications to a vehicle user as being based on an actual position (A) of said vehicle and on an actually calculated route, said method being **characterized by** the following steps:
- detecting a user request for such calculating and evaluating an actual vehicle speed value;
- as based on such speed value, finding a predicted vehicle position (C) at a predetermined future instant in time;
- and calculating said navigation route as between said predicted vehicle position (C) and said destination (E).

2. A method as claimed in Claim 1, being **characterized by** calculating said navigation route as from said actual vehicle position in case of a speed value at or below a threshold value.

3. A system being arranged for implementing a method as claimed in Claim 1 and comprising calculating means (32) for calculating a navigation route towards a destination (E) and for feeding presentation means (42) for sequentially presenting (28) navigation indications to a vehicle user, as being based on an actual position (A) of said vehicle and on an actually calculated route, said system being **characterized by** comprising:
- detecting means for detecting a user request for such calculating and evaluating an actual vehicle speed value;
- predicting means for as based on such speed value, finding a predicted vehicle position (C) at a predetermined future instant in time;
- and activating means for activating said route recalculating as between said predicted vehicle position (C) and said destination (E).

4. A motor vehicle comprising a system as claimed in Claim 3 and being arranged for implementing a method as claimed in Claim 1.
